(19) Europäisches Patentamt / European Patent Office / Office européen des brevets

(11) **EP 4 461 769 A1**

(12) **EUROPEAN PATENT APPLICATION**

(43) Date of publication:
**13.11.2024 Bulletin 2024/46**

(21) Application number: **23172048.3**

(22) Date of filing: **08.05.2023**

(51) International Patent Classification (IPC):
**C08L 23/12** (2006.01)

(52) Cooperative Patent Classification (CPC):
(C-Sets available)
**C08L 23/12;** C08L 2205/025; C08L 2205/035;
C08L 2205/08; C08L 2207/02                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **LUMMERSTORFER, Thomas**
  **4021 Linz (AT)**

• **PRETSCHUH, Claudia**
  **4061 Pasching (AT)**
• **LESSLHUMER, Jürgen**
  **4682 Geboltskirchen (AT)**
• **SOBCZAK, Lukas**
  **4021 Linz (AT)**
• **GAHLEITNER, Markus**
  **4021 Linz (AT)**
• **GRESTENBERGER, Georg**
  **4021 Linz (AT)**

(74) Representative: **Maiwald GmbH**
**Elisenhof**
**Elisenstraße 3**
**80335 München (DE)**

(54) **COMPOSITE MATERIAL CONTAINING BAMBOO-BASED FIBERS AND HAVING HIGH IMPACT STRENGTH**

(57)     The present disclosure provides a composite material comprising, relative to the total weight of the composite material, (a) from 25.0 to 55.0 wt.-% of a first heterophasic propylene-ethylene copolymer (HECO1), (b) from 10.0 to 30.0 wt.-% of a second heterophasic propylene-ethylene copolymer (HECO2), (c) from 5.0 to 15.0 wt.-% of an ethylene-based elastomer, (d) from 5.0 to 30.0 wt.-% of bamboo-based fibers, (e) from 1.0 to 5.0 wt.-% of a compatibilizer, (f) from 0.1 to 5.0 wt.-% of additives, and (g) optionally from 0.1 to 15.0 wt.-% of a high density polyethylene. An injection molded article comprising the composite material is also disclosed. Furthermore, the use of bamboo-based fibers is provided for reinforcing a polypropylene-based composition comprising at least a first heterophasic propylene-ethylene copolymer (HECO1), a second heterophasic propylene-ethylene copolymer (HECO2), an ethylene-based elastomer, a compatibilizer and additives.

EP 4 461 769 A1

(52) Cooperative Patent Classification (CPC): (Cont.)

C-Sets
**C08L 23/12, C08K 7/02, C08L 23/14,**
**C08L 23/12, C08L 23/14, C08L 23/16,**
**C08L 23/147;**
**C08L 23/12, C08K 7/02, C08L 23/14,**
**C08L 23/12, C08L 23/14, C08L 23/16,**
**C08L 51/06;**
**C08L 23/12, C08L 23/14, C08L 23/12,**
**C08L 23/14, C08L 23/16, C08L 1/02,**
**C08L 23/147;**
**C08L 23/12, C08L 23/14, C08L 23/12,**
**C08L 23/14, C08L 23/16, C08L 1/02, C08L 51/06**

**Description**

**TECHNICAL FIELD**

The present invention relates to a composite material comprising polymers and bamboo-based fibers. The composite material may be used for preparing injection molded articles, like injection molded articles for the automotive sector.

**BACKGROUND OF INVENTION**

Polymer compositions that are reinforced with inorganic fiber or filler, like glass fiber or talc, are well-known in the art. Said materials are typically used for manufacturing, for example in the automotive industry, due to their good balance in terms of strength and stiffness, on the one hand, and impact properties on the other.

There is a continuing effort in the art, and particularly in the automotive industry, to increase the content of renewables in reinforced polymer compositions in order to save non-renewable resources and/or decrease a carbon dioxide footprint of said materials. One possible approach for increasing the renewable content in reinforced polymer compositions is by using fibrous materials from natural sources. However, developments in said direction have so far only provided composite materials that show a comparatively low impact strength and/or a stiffness and impact strength which is not balanced in a way as it is desired in the art.

US 2015/0252179 A1 relates to a polyolefin-natural fiber composite composition for extrusion molding, and more particularly to a polyolefin-natural fiber composite composition, which comprises polyolefin resin, natural fiber, thermoplastic elastic rubber and an anhydrous maleic acid-grafted polypropylene-based compatibilizer. CN 103232641 A describes a bamboo-plastic automotive bumper comprising the following components in parts by weight: 100 parts of polypropylene, 6-10 parts of high-density polyethylene, 8-16 parts of thermoplastic elastomer, 20-40 part of bamboo fiber and 0.4-0.8 part of a modifying agent. EP 2976381 A1 relates to a bamboo fibers reinforced polypropylene composition comprising at least 50 wt% of an heterophasic propylene copolymer; from 2 to 40 wt% of bamboo fibers; from 0.1 to 10 wt% of a coupling agent.

It is desired in the art to provide a composite material based on a polymer matrix and a renewable reinforcing agent that combines a high impact strength with a good level of stiffness. Further, the composite material should have a comparatively low density.

One object of the present invention is to provide a composite material containing fiber from a natural source and having good mechanical properties, like a good balance between strength and stiffness, on the one hand, and impact strength on the other hand.

**SUMMARY OF INVENTION**

The foregoing object is solved by the subject-matter of the appended claims. In one aspect of the present invention, a composite material is provided. The composite comprises, relative to the total weight of the composite material,

(a) from 25.0 to 55.0 wt.-% of a first heterophasic propylene-ethylene copolymer (HECO1) having a melt flow rate (MFR$_2$), determined according to ISO 1133 at 230 °C and 2.16 kg, in the range from 60 to 200 g/10 min,
(b) from 10.0 to 30.0 wt.-% of a second heterophasic propylene-ethylene copolymer (HECO2) having

- a melt flow rate (MFR$_2$), determined according to ISO 1133 at 230 °C and 2.16 kg, in the range from 4 to 30 g/10 min, and
- a soluble fraction (SF), determined according to CRYSTEX QC analysis, in the range from 17.0 to 40.0 wt.-%, relative to the total weight of the second heterophasic propylene-ethylene copolymer (HECO2),

(c) from 5.0 to 15.0 wt.-% of an ethylene-based elastomer being a copolymer of ethylene and an alpha-olefin co-monomer having from 4 to 12 carbon atoms, and the ethylene-based elastomer having a density in the range from 850 to 900 kg/m$^3$,
(d) from 5.0 to 30.0 wt.-% of bamboo-based fibers,
(e) from 1.0 to 5.0 wt.-% of a compatibilizer being a polar modified polypropylene or a polar modified elastomer,
(f) from 0.1 to 5.0 wt.-% of additives, and
(g) optionally from 0.1 to 15.0 wt.-% of a high density polyethylene.

It has surprisingly been found that the composite material as defined herein provides for a good balance between strength/stiffness and impact strength. The composite material has a low density, e.g., when compared to a comparable talc-reinforced material, and contains a significant amount of bamboo-based fiber providing the composite material with a desirable renewable content. Further, the use of bamboo-based fiber in combination of the polymers as defined herein unexpectedly provided for an improved balance of properties, when compared to natural fibers that are not based on bamboo, and even when compared to talc reinforcing agent.

In one embodiment, the composite material has a melt flow rate ($MFR_2$), determined according to ISO 1133 at 230 °C and 2.16 kg, in the range from 6 to 100 g/10 min, preferably in the range of 7 to 90 g/10 min, more preferably in the range of 8 to 80 g/10 min.

In one embodiment, the composite material has a density of less than 1000 $kg/m^3$, and preferably in the range of 900 to 990 $kg/m^3$.

In one embodiment, the composite material has

- a flexural modulus, determined according to ISO 178 of at least 1500 MPa, preferably at least 1550 MPa, and more preferably at least 1575 MPa, optionally the upper limit being 2200 MPa; and
- a Charpy Notched impact strength at 23 °C, determined according to ISO 179 1eA, of at least 15.0 $kJ/m^2$, preferably at least 16.0 $kJ/m^2$, and more preferably at least 17.0 $kJ/m^2$, optionally the upper limit being 50.0 $kJ/m^2$.

In one embodiment, the composite material comprises

(a) from 28.0 to 52.0 wt.-%, preferably from 30.0 to 50.0 wt.-%, and more preferably from 32.5 to 45.0 wt.-%, of the first heterophasic propylene-ethylene copolymer (HECO1),
(b) from 15.0 to 28.0 wt.-%, preferably from 18.0 to 27.0 wt.-%, and more preferably from 20.0 to 27.0 wt.-% of the second heterophasic propylene-ethylene copolymer (HECO2),
(c) from 6.0 to 13.0 wt.-%, preferably 6.5 to 12.0 wt.-%, and more preferably 7.0 to 11.0 wt.-%, of the ethylene-based elastomer,
(d) from 8.0 to 28.0 wt.-%, preferably from 10.0 to 26.0 wt.-%, and more preferably from 12.0 to 22.0 wt.-%, of the bamboo-based fibers,
(e) from 1.0 to 5.0 wt.-%, preferably from 1.5 to 4.5 wt.-%, and more preferably from 2.0 to 4.0 wt.-%, of the compatibilizer,
(f) from 0.2 to 5.0 wt.-%, preferably 0.3 to 5.0 wt.-%, and more preferably 0.4 to 5.0 wt.-%, of the additives,
(g) from 1.0 to 15.0 wt.-%, preferably from 2.0 to 12.0 wt.-%, and more preferably from 5.0 to 11.0 wt.-%, of the high density polyethylene ,

wherein the weight amounts are relative to the total weight of the composite material, and optionally wherein the weight amounts add up to at least 98.0 wt.-%, preferably at least 99.0 wt.-%, and more preferably to 100.0 wt.-%.

In one embodiment, the first heterophasic propylene-ethylene copolymer (HECO1) has one or both, preferably both, of the following characteristics:

- a soluble fraction (SF) content, determined according to CRYSTEX QC analysis, in the range from 6.0 to 22.0 wt.-%, preferably 8.0 to 20.0 wt.-%, and more preferably 10.0 to 19.0 wt.-%, relative to the total weight of the first heterophasic propylene-ethylene copolymer (HECO1); and
- an intrinsic viscosity, determined according to DIN ISO 1628/1, of the soluble fraction content (iV(SF)), according to CRYSTEX QC analysis, in the range from 1.5 to 3.5 dL/g, preferably 1.7 to 3.3 dL/g, and more preferably 1.8 to 3.2 dL/g.

In one embodiment, the second heterophasic propylene-ethylene copolymer (HECO2) has one or both, preferably both, of the following characteristics:

- a melt flow rate ($MFR_2$), determined according to ISO 1133 at 230 °C and 2.16 kg, in the range from 4 to 25 g/10 min, preferably from 4 to 20 g/10 min, and more preferably from 5 to 15 g/10 min; and
- an intrinsic viscosity, determined according to DIN ISO 1628/1, of the soluble fraction content (iV(SF)), according to CRYSTEX QC analysis, in the range from 2.0 to 7.0 dL/g, preferably from 2.5 to 6.8 dL/g, and more preferably from 3.5 to 6.5 dL/g.

In one embodiment, the second heterophasic propylene-ethylene copolymer (HECO2) has at least one, preferably at least two, and more preferably all, of the following characteristics:

- a soluble fraction (SF), determined according to CRYSTEX QC analysis, in the range from 18.0 to 38.0 wt.-%,

preferably 19.0 to 35.0 wt.-%, and more preferably 19.0 to 33.0 wt.-%, relative to the total weight of the second heterophasic propylene-ethylene copolymer (HECO2);

- the soluble fraction (SF) having an ethylene content (C2(SF)) determined by FT-IR spectroscopy calibrated by quantitative $^{13}$C-NMR spectroscopy, in the range from 20.0 to 50.0 wt.-%, preferably in the range from 20.0 to 45.0 wt.-%, and more preferably in the range from 21.0 to 40.0 wt.-%, relative to the total weight of the soluble fraction (SF) of the second heterophasic propylene-ethylene copolymer (HECO2); and

- a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, in the range of from 1.2 to 6.0, preferably from 1.5 to 5.0, and more preferably in the range of 2.0 to 4.0, the intrinsic viscosity being determined according to DIN ISO 1628/1.

In one embodiment, the ethylene-based elastomer has a density in the range of 855 to 895 kg/m$^3$, and a melt flow rate (MFR$_2$), determined according to ISO 1133 at 190 °C and 2.16 kg, in the range from 0.5 to 30 g/10 min.

In one embodiment, the ethylene-based elastomer is a copolymer of ethylene and an alpha-olefin co-monomer having from 4 to 8 carbon atoms, and preferably is a copolymer of ethylene and 1-octene.

In one embodiment, the compatibilizer is a polar modified propylene homo- or copolymer, and optionally wherein the polar modified propylene homo- or copolymer is a propylene homo- or copolymer grafted with maleic anhydride and/or acrylic acid.

In one embodiment, the bamboo-based fibers have an average fiber length, preferably a weight-based average fiber length in the range of 0.5 to 10 mm, preferably in the range of 0.5 to 7.5 mm, more preferably in the range of 0.7 to 7.0 mm, and even more preferably in the range of 0.8 to 6.5 mm.

In one embodiment, the high density polyethylene has a density in the range of 945 to 965 kg/m$^3$, and optionally has a melt flow rate (MFR$_2$), determined according to ISO 1133 at 190 °C and 2.16 kg, in the range from 0.5 to 30 g/10 min.

Another aspect of the present invention relates to an injection molded article comprising the composite material as defined herein.

Yet another aspect relates to the use of bamboo-based fibers for reinforcing a polypropylene-based composition or an injection molded part comprising a polypropylene-based composition, wherein the polypropylene-based composition comprises

(i) a first heterophasic propylene-ethylene copolymer (HECO1) having a melt flow rate (MFR$_2$), determined according to ISO 1133 at 230 °C and 2.16 kg, in the range from 60 to 200 g/10 min,

(ii) a second heterophasic propylene-ethylene copolymer (HECO2) having

- a melt flow rate (MFR$_2$), determined according to ISO 1133 at 230 °C and 2.16 kg, in the range from 4 to 30 g/10 min, and

- a soluble fraction (SF), determined according to CRYSTEX QC analysis, in the range from 17.0 to 40.0 wt.-%, relative to the total weight of the second heterophasic propylene-ethylene copolymer (HECO2),

(iii) an ethylene-based elastomer being a copolymer of ethylene and an alpha-olefin co-monomer having from 4 to 12 carbon atoms, and the ethylene-based elastomer having a density in the range from 850 to 900 kg/m$^3$,

(iv) a compatibilizer being a polar modified polypropylene or a polar modified elastomer,

(v) additives, and

(vi) optionally a high density polyethylene.

**DEFINITIONS**

A "propylene homopolymer" is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A "propylene copolymer" is a copolymer of propylene monomer units and comonomer units, preferably selected from ethylene and C$_4$-C$_8$ alpha-olefins, and more preferably one type of comonomer units selected from ethylene and C$_4$-C$_8$ alpha-olefins. A "propylene random copolymer" is a propylene copolymer wherein the comonomer units are randomly distributed along the polymer chain, whilst a "propylene block copolymer" comprises blocks of propylene monomer units and blocks of comonomer units. Propylene random copolymers can comprise comonomer units from one or more comonomers different in their amounts of carbon atoms.

A "heterophasic propylene-ethylene copolymer" comprises a crystalline matrix phase and an elastomeric phase being dispersed in said matrix phase. Said crystalline matrix phase may be a propylene homopolymer or a random copolymer of propylene and ethylene. Said elastomeric phase is typically a propylene-ethylene copolymer with a high amount of ethylene comonomer that is not randomly distributed in the polymer chain but is distributed in a comonomer-rich block structure and a propylene-rich block structure. A heterophasic propylene copolymer usually differentiates from a one-phasic propylene copolymer, for example, in that it shows two distinct glass transition temperatures Tg which are attributed to the matrix phase and the elastomeric phase.

"Bamboo-based fibers" in the meaning of the present disclosure are fibers of any form that are derived from bamboo. Bamboos are plants that belong to the family *Bambusoideae* which is a subfamily of the grass family *Poaceae.* Bamboo-based fiber may be derived from tribes of the woody bamboos, like *Bambuseae* and *Arundinarieae.* Among the tribes of the woody bamboos, the bamboo genera that are particularly suitable for production of bamboo-based fiber may be, bur are not limited to, *Bambusa, Dendrocalamus, Gigantochloa, Guadua* and *Phyllostachys.* Bamboo parts, e.g., the culm of a woody bamboo, typically contains fiber strands or fiber bundles, each of which containing a plurality of elementary fibers which can be identified (e.g., by electron microscopy) by a characteristic cross-sectional microstructure. The cross-sectional microstructure typically includes a polylamellate structure of rounded polygonal (e.g., hexagonal or pentagonal) shape with a small hole (the lumen) in the middle. Bamboo-based fibers may be obtained from bamboo parts by different processes. Preferably, the bamboo-based fibers as defined herein are obtained from bamboo or bamboo parts by a mechanical and/or thermo-mechanical process. WO2019/093898 A2 (see e.g.,: p. 47, l. 23 - p. 57, l. 15) describes a device and a method to prepare bamboo-based fibers from a bamboo part by a mechanical process ("dry" fiber extraction). Aqueous processes ("wet" fiber extraction) are also known for producing bamboo-based fibers. Once isolated from the plant, fiber strands and fiber bundles are often referred to as "technical bamboo fiber". A technical bamboo fiber typically contains a plurality of elementary fibers with a characteristic microstructure as described above.

Where the term "comprising" is used in the present description and claims, it does not exclude other non-specified elements of major or minor functional importance. For the purposes of the present invention, the term "essentially consisting of" and "consisting of' are considered to be specific embodiments of the term "comprising of". If hereinafter a group is defined to comprise at least a certain number of features or embodiments, this is also to be understood to disclose a group, which optionally essentially consists only of these features or embodiments or consists only of these features or embodiments. The term "essentially consisting of" is to be understood in that specific further components can be present, namely those not materially affecting the essential characteristics of the material to which the term refers.

Whenever the terms "including" or "having" are used, these terms are meant to be equivalent to "comprising" as defined above. Unless clearly indicated otherwise, use of the terms "a", "an," and the like, refers to one or more. Amounts are given in % by weight (wt.-%) unless it is stated otherwise.

In the following, the present invention is described in more detail.

## DETAILED DESCRIPTION

### 1. The composite material

One aspect of the invention provides a composite material. The composite material comprises, relative to the total weight of the composite material,

(a) from 25.0 to 55.0 wt.-% of a first heterophasic propylene-ethylene copolymer (HECO1) having a melt flow rate (MFR$_2$), determined according to ISO 1133 at 230 °C and 2.16 kg, in the range from 60 to 200 g/10 min,

(b) from 10.0 to 30.0 wt.-% of a second heterophasic propylene-ethylene copolymer (HECO2) having

- a melt flow rate (MFR$_2$), determined according to ISO 1133 at 230 °C and 2.16 kg, in the range from 4 to 30 g/10 min, and
- a soluble fraction (SF), determined according to CRYSTEX QC analysis, in the range from 17.0 to 40.0 wt.-%, relative to the total weight of the second heterophasic propylene-ethylene copolymer (HECO2),

(c) from 5.0 to 15.0 wt.-% of an ethylene-based elastomer being a copolymer of ethylene and an alpha-olefin co-monomer having from 4 to 12 carbon atoms, and the ethylene-based elastomer having a density in the range from 850 to 900 kg/m$^3$,

(d) from 5.0 to 30.0 wt.-% of bamboo-based fibers,

(e) from 1.0 to 5.0 wt.-% of a compatibilizer being a polar modified polypropylene or a polar modified elastomer,

(f) from 0.1 to 5.0 wt.-% of additives, and

(g) optionally from 0.1 to 15.0 wt.-% of a high density polyethylene.

In the following sections, the composite material and its components are described in further detail.

1.1 Properties and composition of the composite material

The composite material typically has a melt flow rate that is suitable for application in injection molding processes. The composite material may have a melt flow rate ($MFR_2$), determined according to ISO 1133 at 230 °C and 2.16 kg, in the range from 6 to 100 g/10 min, preferably in the range of 7 to 90 g/10 min, and more preferably in the range of 8 to 80 g/10 min.

In one embodiment, the composite material has melt flow rate ($MFR_2$), determined according to ISO 1133 at 230 °C and 2.16 kg, in the range from a 6 to 30 g/10 min, like in the range of 7 to 20 g/10 min, or in the range of 7 to 15 g/10 min.

The composite material may have a density of less than 1000 $kg/m^3$, and preferably in the range of 900 to 990 $kg/m^3$, like in the range of 920 to 990 $kg/m^3$. When the composite material has a density of less than 1000 $kg/m^3$, it is particularly useful for applications where a comparatively light weight is advantageous, like in the automotive sector.

The composite material typically has specific mechanical properties, like tensile properties and/or impact properties, which make it particularly useful for application in manufacturing, like automotive manufacturing.

The composite material may have specific tensile properties. The composite material may have a tensile modulus, determined according to ISO 527-1A, of at least 1650 MPa, preferably at least 1700 MPa, and more preferably at least 1750 MPa. The upper limit for the tensile modulus of the composite material may be 2200 MPa or 2400 MPa, determined according to ISO 527-1A. Thus, the composite material may have a tensile modulus, determined according to ISO 527-1A, in the range of 1650 to 2400 MPa, and preferably 1700 to 2400 MPa, like in a range of 1750 to 2200 MPa.

The composite material may have a tensile strength, determined according to ISO 527-2, of at least 18 MPa, preferably at least 20 MPa, and more preferably at least 22 MPa. The composite material may have a tensile strength determined according to ISO 527-2 in the range of 18 to 30 MPa, preferably 20 to 28 MPa, and more preferably 22 to 26 MPa.

The composite material may have specific flexural properties. The composite material may have a flexural modulus, determined according to ISO 178, of at least 1500 MPa, preferably at least 1550 MPa, and more preferably at least 1575 MPa. The composite material may have a flexural modulus, determined according to ISO 178, in a range of 1500 to 2200 MPa, preferably in a range of 1550 to 2100 MPa, and more preferably in a range of 1575 to 2050 MPa.

The composite material typically has a high impact strength, like impact strength determined according to the Charpy tests for impact strength. The composite material may have a Charpy Notched impact strength at 23 °C, determined according to ISO 179 1eA, of at least 15.0 $kJ/m^2$, preferably at least 16.0 $kJ/m^2$, and more preferably at least 17.0 $kJ/m^2$. The composite material may have a Charpy Notched impact strength at 23 °C, determined according to ISO 179 1eA, in the range of 15.0 to 50.0 $kJ/m^2$, preferably in the range of 16.0 to 45.0 $kJ/m^2$, more preferably 17.0 to 40.0 $kJ/m^2$, like in a range of 17.0 to 28.0 $kJ/m^2$.

Preferably, one or more of the above defined tensile properties and one or more of the above defined impact properties are realized in combination so that the composite material is characterized by a good balance between stiffness and impact.

According to one preferred embodiment, the composite material has:

- a flexural modulus, determined according to ISO 178, of at least 1500 MPa, preferably at least 1550 MPa, and more preferably at least 1575 MPa; and
- a Charpy Notched impact strength at 23 °C, determined according to ISO 179 1eA, of at least 15.0 $kJ/m^2$, preferably at least 16.0 $kJ/m^2$, and more preferably at least 17.0 $kJ/m^2$.

According to one preferred embodiment, the composite material has:

- a flexural modulus, determined according to ISO 178, in the range of 1500 to 2200 MPa, and preferably 1550 to 2100 MPa, like in a range of 1575 to 2000 MPa, and
- a Charpy Notched impact strength at 23 °C, determined according to ISO 179 1eA, in the range of 15.0 to 50.0 $kJ/m^2$, preferably in the range of 16.0 to 45.0 $kJ/m^2$, more preferably 17.0 to 40.0 $kJ/m^2$, like in a range of 17.0 to 28.0 $kJ/m^2$.

The composite material comprises, relative to the total weight of the composite material,

(a) from 25.0 to 55.0 wt.-%, preferably from 28.0 to 52.0 wt.-%, more preferably from 30.0 to 50.0 wt.-%, and even more preferably from 32.5 to 45.0 wt.-%, of the first heterophasic propylene-ethylene copolymer (HECO1),
(b) from 10.0 to 30.0 wt.-%, preferably from 15.0 to 28.0 wt.-%, more preferably from 18.0 to 27.0 wt.-%, and even more preferably from 20.0 to 27.0 wt.-%, of the second heterophasic propylene-ethylene copolymer (HECO2),
(c) from 5.0 to 15.0 wt.-%, preferably from 6.0 to 13.0 wt.-%, more preferably 6.5 to 12.0 wt.-%, and even more preferably 7.0 to 11.0 wt.-%, of the ethylene-based elastomer,

(d) from 5.0 to 30.0 wt.-%, preferably from 8.0 to 28.0 wt.-%, more preferably from 10.0 to 26.0 wt.-%, and even more preferably from 12.0 to 22.0 wt.-%, of the bamboo-based fibers,

(e) from 1.0 to 5.0 wt.-%, preferably from 1.0 to 5.0 wt.-%, more preferably from 1.5 to 4.5 wt.-%, and even more preferably from 2.0 to 4.0 wt.-%, of the compatibilizer,

(f) from 0.1 to 5.0 wt.-%, preferably from 0.2 to 5.0 wt.-%, more preferably 0.3 to 5.0 wt.-%, and even more preferably 0.4 to 5.0 wt.-%, of the additives, and

(g) optionally from 0.1 to 15.0 wt.-%, preferably from 1.0 to 15.0 wt.-%, more preferably from 2.0 to 12.0 wt.-%, and even more preferably from 5.0 to 11.0 wt.-%, of the high density polyethylene.

The optional component (g) may be absent from the composite material. In said case, the weight amounts of components (a) to (f) may add up to at least 98.0 wt.-%, preferably at least 99.0 wt.-%, and more preferably to 100.0 wt.-%, relative to the total weight of the composite material.

Preferably, the optional component (g) is present in the composite material. Thus, the composite material preferably comprises, relative to the total weight of the composite material,

(a) from 25.0 to 55.0 wt.-%, preferably from 28.0 to 52.0 wt.-%, more preferably from 30.0 to 50.0 wt.-%, and even more preferably from 32.5 to 45.0 wt.-%, of the first heterophasic propylene-ethylene copolymer (HECO1),

(b) from 10.0 to 30.0 wt.-%, preferably from 15.0 to 28.0 wt.-%, more preferably from 18.0 to 27.0 wt.-%, and even more preferably from 20.0 to 27.0 wt.-%, of the second heterophasic propylene-ethylene copolymer (HECO2),

(c) from 5.0 to 15.0 wt.-%, preferably from 6.0 to 13.0 wt.-%, more preferably 6.5 to 12.0 wt.-%, and even more preferably 7.0 to 11.0 wt.-%, of the ethylene-based elastomer,

(d) from 5.0 to 30.0 wt.-%, preferably from 8.0 to 28.0 wt.-%, more preferably from 10.0 to 26.0 wt.-%, and even more preferably from 12.0 to 22.0 wt.-%, of the bamboo-based fibers,

(e) from 1.0 to 5.0 wt.-%, preferably from 1.0 to 5.0 wt.-%, more preferably from 1.5 to 4.5 wt.-%, and even more preferably from 2.0 to 4.0 wt.-%, of the compatibilizer,

(f) from 0.1 to 5.0 wt.-%, preferably from 0.2 to 5.0 wt.-%, more preferably 0.3 to 5.0 wt.-%, and even more preferably 0.4 to 5.0 wt.-%, of the additives, and

(g) from 0.1 to 15.0 wt.-%, preferably from 1.0 to 15.0 wt.-%, more preferably from 2.0 to 12.0 wt.-%, and even more preferably from 5.0 to 11.0 wt.-%, of the high density polyethylene.

The weight amount of the components (a) to (g) may add up to at least 98.0 wt.-%, preferably at least 99.0 wt.-%, and more preferably to 100.0 wt.-%, relative to the total weight of the composite material. In one embodiment, the composite material essentially consists of components (a) to (g). In another embodiment, the composite material consists of components (a) to (g).

The composite material may comprise

(a) from 25.0 to 55.0 wt.-%, preferably from 28.0 to 52.0 wt.-%, more preferably from 30.0 to 50.0 wt.-%, and even more preferably from 32.5 to 45.0 wt.-%, of the first heterophasic propylene-ethylene copolymer (HECO1),

(b) from 10.0 to 30.0 wt.-%, preferably from 15.0 to 28.0 wt.-%, more preferably from 18.0 to 27.0 wt.-%, and even more preferably from 20.0 to 27.0 wt.-%, of the second heterophasic propylene-ethylene copolymer (HECO2),

(c) from 5.0 to 15.0 wt.-%, preferably from 6.0 to 13.0 wt.-%, more preferably 6.5 to 12.0 wt.-%, and even more preferably 7.0 to 11.0 wt.-%, of the ethylene-based elastomer,

(d) from 5.0 to 30.0 wt.-%, preferably from 8.0 to 28.0 wt.-%, more preferably from 10.0 to 26.0 wt.-%, and even more preferably from 12.0 to 22.0 wt.-%, of the bamboo-based fibers,

(e) from 1.0 to 5.0 wt.-%, preferably from 1.0 to 5.0 wt.-%, more preferably from 1.5 to 4.5 wt.-%, and even more preferably from 2.0 to 4.0 wt.-%, of the compatibilizer,

(f) from 0.1 to 5.0 wt.-%, preferably from 0.2 to 5.0 wt.-%, more preferably 0.3 to 5.0 wt.-%, and even more preferably 0.4 to 5.0 wt.-%, of the additives, and

(g) from 0.1 to 15.0 wt.-%, preferably from 1.0 to 15.0 wt.-%, more preferably from 2.0 to 12.0 wt.-%, and even more preferably from 5.0 to 11.0 wt.-%, of the high density polyethylene,

wherein the weight amounts are defined relative to the total weight of the composite material, and optionally wherein the weight amounts add up to at least 98.0 wt.-%, preferably at least 99.0 wt.-%, and more preferably to 100.0 wt.-%.

The composite material may essentially consist of or may consist of

(a) from 25.0 to 55.0 wt.-%, preferably from 28.0 to 52.0 wt.-%, more preferably from 30.0 to 50.0 wt.-%, and even more preferably from 32.5 to 45.0 wt.-%, of the first heterophasic propylene-ethylene copolymer (HECO1),

(b) from 10.0 to 30.0 wt.-%, preferably from 15.0 to 28.0 wt.-%, more preferably from 18.0 to 27.0 wt.-%, and even more preferably from 20.0 to 27.0 wt.-%, of the second heterophasic propylene-ethylene copolymer (HECO2),

(c) from 5.0 to 15.0 wt.-%, preferably from 6.0 to 13.0 wt.-%, more preferably 6.5 to 12.0 wt.-%, and even more preferably 7.0 to 11.0 wt.-%, of the ethylene-based elastomer,

(d) from 5.0 to 30.0 wt.-%, preferably from 8.0 to 28.0 wt.-%, more preferably from 10.0 to 26.0 wt.-%, and even more preferably from 12.0 to 22.0 wt.-%, of the bamboo-based fibers,

(e) from 1.0 to 5.0 wt.-%, preferably from 1.0 to 5.0 wt.-%, more preferably from 1.5 to 4.5 wt.-%, and even more preferably from 2.0 to 4.0 wt.-%, of the compatibilizer,

(f) from 0.1 to 5.0 wt.-%, preferably from 0.2 to 5.0 wt.-%, more preferably 0.3 to 5.0 wt.-%, and even more preferably 0.4 to 5.0 wt.-%, of the additives, and

(g) from 0.1 to 15.0 wt.-%, preferably from 1.0 to 15.0 wt.-%, more preferably from 2.0 to 12.0 wt.-%, and even more preferably from 5.0 to 11.0 wt.-%, of the high density polyethylene.

In one embodiment, the composite material does not contain a polymeric material other than components (a) to (c), (e) and (g) in an amount of more than 5.0 wt.-%. Minor amounts, like amounts of 5.0 wt.-% or less, of additional polymeric components may be present in the composite material, e.g., corresponding to one or more polymer carrier resins introduced as parts of masterbatches. This is also further described below in section "The additives".

In one embodiment, the composite material does not contain an inorganic filler and/or inorganic reinforcing agent (e.g., glass fibers and/or talc) in an amount of more than 5 wt.-%. In one embodiment, the composite material does not contain glass fibers.

The composite material may comprise one or more inevitable side products derived from the preparation of components (a) to (c), (e) and (g).

The composite material is obtainable by melt-blending and/or melt-compounding, e.g., in a screw extruder, like a twin-screw extruder.

The composite material according to invention is preferably useful for preparing injection molded articles. Preferably, the composite material is useful for preparing injection molded articles for manufacturing applications, like automotive manufacturing. Said injection molded articles are also further described herein below in section "Injection molded article".

1.2 The first heterophasic propylene-ethylene copolymer (HECO1)

The composite material comprises a first heterophasic propylene-ethylene copolymer (HECO1). The first heterophasic propylene-ethylene copolymer (HECO1) comprises:

i) a crystalline matrix phase; and
ii) an elastomeric phase being dispersed in said matrix phase.

The first heterophasic propylene-ethylene copolymer (HECO1) is present in the composite material in an amount in the range of from 25.0 to 55.0 wt.-%, preferably 28.0 to 52.0 wt.-%, more preferably from 30.0 to 50.0 wt.-%, and even more preferably from 32.5 to 45.0 wt-.%, relative to the total weight of the composite material.

The first heterophasic propylene-ethylene copolymer (HECO1) has a melt flow rate ($MFR_2$), determined according to ISO 1133 at 230 °C and 2.16 kg, in the range from 60 to 200 g/10 min. Thus, the first heterophasic propylene-ethylene copolymer (HECO1) is characterized by a comparatively high melt flow rate. Preferably, the first heterophasic propylene-ethylene copolymer (HECO1) has a melt flow rate ($MFR_2$), determined according to ISO 1133 at 230 °C and 2.16 kg, in the range of 70 to 180 g/10 min, more preferably 75 to 160 g/10 min, and even more preferably in the range of 80 to 140 g/10 min, like in the range of 90 to 120 g/10 min.

The crystalline matrix phase of the first heterophasic propylene-ethylene copolymer (HECO1) may have a melt flow rate ($MFR_2$), determined according to ISO 1133 at 230 °C and 2.16 kg, in the range of 80 to 500 g/10 min, preferably 90 to 450 g/10 min, and more preferably in the range of 100 to 400 g/10 min, like in the range of 120 to 200 g/10 min.

The first heterophasic propylene-ethylene copolymer (HECO1) may have a melting temperature Tm, determined by differential scanning calorimetry (DSC), in the range of from 150 to 170°C, preferably 155 to 168°C, and more preferably 162 to 168°C.

The first heterophasic propylene-ethylene copolymer (HECO1) may be further defined by specific characteristics that are determined according to CRYSTEX QC analysis, preferably using trichlorobenzene as solvent. This measuring method is further described below in section "Measuring methods". CRYSTEX QC analysis is suitable to determine a crystalline fraction (CF) and a soluble fraction (SF) of the first heterophasic propylene-ethylene copolymer (HECO1). The crystalline fraction (CF) contains for the most part the matrix phase and only a small part of the elastomeric phase and the soluble fraction (SF) contains for the most part the elastomeric phase and only a small part of the matrix phase.

Due to the differences in the separation methods of cold xylene extraction and the CRYSTEX QC method the properties of XCS/XCI fractions on the one hand and crystalline/soluble (CF/SF) fractions on the other hand are typically not exactly the same, meaning that the amounts of matrix phase and elastomeric phase can differ as well as the properties.

The first heterophasic propylene-ethylene copolymer (HECO1) may have an ethylene content (C2(total)), determined by FT-IR spectroscopy calibrated by quantitative $^{13}$C-NMR spectroscopy, in the range from 2.0 to 14.0 wt.-%, preferably in the range from 2.5 to 12.5 wt.-%, and more preferably in the range from 3.0 to 11.5 wt.-%, like in the range from 5.0 to 11.0 wt.-%, relative to the total weight of the first heterophasic propylene-ethylene copolymer (HECO1).

The first heterophasic propylene-ethylene copolymer (HECO1) may have a soluble fraction (SF) content, determined according to CRYSTEX QC analysis, in the range from 6.0 to 22.0 wt.-%, preferably 8.0 to 20.0 wt.-%, and more preferably 10.0 to 19.0 wt.-%, relative to the total weight of the first heterophasic propylene-ethylene copolymer (HECO1).

The intrinsic viscosity, determined according to DIN ISO 1628/1, of the soluble fraction content (iV(SF)), according to CRYSTEX QC analysis, may be in the range from 1.5 to 3.5 dL/g, preferably 1.7 to 3.3 dL/g, and more preferably 1.8 to 3.2 dL/g.

The soluble fraction (SF) may have an ethylene content (C2(SF)), determined by FT-IR spectroscopy calibrated by quantitative $^{13}$C-NMR spectroscopy, in the range from 30.0 to 50.0 wt.-%, preferably in the range from 33.0 to 45.0 wt.-%, and more preferably in the range from 35.0 to 42.0 wt.-%, relative to the total weight of the soluble fraction (SF) of the first heterophasic propylene-ethylene copolymer (HECO1).

In one preferred embodiment, the first heterophasic propylene-ethylene copolymer (HECO1) has:

- a soluble fraction (SF) content, determined according to CRYSTEX QC analysis, in the range from 6.0 to 22.0 wt.-%, preferably 8.0 to 20.0 wt.-%, and more preferably 10.0 to 19.0 wt.-%, relative to the total weight of the first heterophasic propylene-ethylene copolymer (HECO1), and

- an intrinsic viscosity, determined according to DIN ISO 1628/1, of the soluble fraction content (iV(SF)), according to CRYSTEX QC analysis, in the range from 1.5 to 3.5 dL/g, preferably 1.7 to 3.3 dL/g, and more preferably 1.8 to 3.2 dL/g.

In one more preferred embodiment, the first heterophasic propylene-ethylene copolymer (HECO1) has:

- a soluble fraction (SF) content, determined according to CRYSTEX QC analysis, in the range from 6.0 to 22.0 wt.-%, preferably 8.0 to 20.0 wt.-%, and more preferably 10.0 to 19.0 wt.-%, relative to the total weight of the first heterophasic propylene-ethylene copolymer (HECO1),
- an intrinsic viscosity, determined according to DIN ISO 1628/1, of the soluble fraction content (iV(SF)), according to CRYSTEX QC analysis, in the range from 1.5 to 3.5 dL/g, preferably 1.7 to 3.3 dL/g, and more preferably 1.8 to 3.2 dL/g, and
- the soluble fraction (SF) has an ethylene content (C2(SF)), determined by FT-IR spectroscopy calibrated by quantitative $^{13}$C-NMR spectroscopy, in the range from 30.0 to 50.0 wt.-%, preferably in the range from 33.0 to 45.0 wt.-%, and more preferably in the range from 35.0 to 42.0 wt.-%, relative to the total weight of the soluble fraction (SF) of the first heterophasic propylene-ethylene copolymer (HECO1).

The first heterophasic propylene-ethylene copolymer (HECO1) preferably has a crystalline fraction (CF) content, determined according to CRYSTEX QC analysis, in the range from 78.0 to 94.0 wt.-%, more preferably 80.0 to 92.0 wt.-%, and even more preferably 81.0 to 90.0 wt.-%, relative to the total weight of the first heterophasic propylene-ethylene copolymer (HECO1).

The crystalline fraction (CF) may have an ethylene content (C2(CF)), determined by FT-IR spectroscopy calibrated by quantitative $^{13}$C-NMR spectroscopy, of less than 5.0 wt.-%, preferably in the range from 0.1 to 4.0 wt.-%, and more preferably in the range from 0.5 to 3.5 wt.-%, like in the range of 1.5 to 3.5 wt.-%, relative to the total weight of the crystalline fraction (CF) of the first heterophasic propylene-ethylene copolymer (HECO1).

The intrinsic viscosity, determined according to DIN ISO 1628/1, of the crystalline fraction content (iV(CF)), according to CRYSTEX QC analysis, may be in the range from 0.7 to 2.0 dL/g, preferably 0.8 to 1.8 dL/g, and more preferably 0.9 to 1.6 dL/g.

In one preferred embodiment, the first heterophasic propylene-ethylene copolymer (HECO1) has:

- a crystalline fraction (CF) content, determined according to CRYSTEX QC analysis, in the range from 78.0 to 94.0 wt.-%, preferably 80.0 to 92.0 wt.-%, and more preferably 81.0 to 90.0 wt.-%, relative to the total weight of the first heterophasic propylene-ethylene copolymer (HECO1),
- the crystalline fraction (CF) having an ethylene content (C2(CF)), determined by FT-IR spectroscopy calibrated by

quantitative $^{13}$C-NMR spectroscopy, of less than 5.0 wt.-%, preferably in the range from 0.1 to 4.0 wt.-%, and more preferably in the range from 0.5 to 3.5 wt.-%, relative to the total weight of the crystalline fraction (CF) of the first heterophasic propylene-ethylene copolymer (HECO1), and

- an intrinsic viscosity, determined according to DIN ISO 1628/1, of the crystalline fraction content (iV(CF)), according to CRYSTEX QC analysis, in the range from 0.7 to 2.0 dL/g, preferably 0.8 to 1.8 dL/g, and more preferably 0.9 to 1.6 dL/g.

The first heterophasic propylene-ethylene copolymer (HECO1) may be characterized by a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, of more than 1.0, preferably in the range of from 1.2 to 3.5, and more preferably in the range of 1.5 to 3.0, the intrinsic viscosity being determined according to DIN ISO 1628/1.

Additionally or alternatively, the first heterophasic propylene-ethylene copolymer (HECO1) may be characterized by its xylene cold solubles (XCS) fraction.

The first heterophasic polypropylene copolymer (HECO1) may have one or both of, preferably both of:

- a xylene cold soluble (XCS) content, determined at 25 °C according ISO 16152, in the range of 6.5 to 23.0 wt.-%, preferably 8.5 to 21.0 wt.-%, and more preferably 10.5 to 20.0 wt.-%, based on the overall weight of the first heterophasic polypropylene copolymer (HECO1), and

- an intrinsic viscosity (IV) determined according to DIN ISO 1628/1 in decalin at 135°C of the XCS fraction in the range of from 1.4 to 3.4 dl/g, preferably 1.6 to 3.2 dl/g, and more preferably 1.8 to 3.1 dl/g.

The first heterophasic polypropylene copolymer (HECO1) is typically obtainable by a Ziegler-Natta-catalyst based polymerization process. The process is typically carried out in a sequential polymerization reactor, like a loop reactor connected to two or more gas phase reactors. An example for such a process is described in detail herein below in the section "Experimental section".

The first heterophasic polypropylene copolymer (HECO1) is a material that is known in the art and commercially available.

1.3 The second heterophasic propylene-ethylene copolymer (HECO2)

The composite material comprises a second heterophasic propylene-ethylene copolymer (HECO2). The second heterophasic propylene-ethylene copolymer (HECO2) comprises:

i) a crystalline matrix phase; and
ii) an elastomeric phase being dispersed in said matrix phase.

The second heterophasic propylene-ethylene copolymer (HECO2) is present in the composite material in an amount in the range of from 10.0 to 30.0 wt.-%, preferably from 15.0 to 28.0 wt.-%, more preferably from 18.0 to 27.0 wt.-%, and even more preferably from 20.0 to 27.0 wt.-%, relative to the total weight of the composite material.

The second heterophasic propylene-ethylene copolymer (HECO2) has a melt flow rate (MFR$_2$), determined according to ISO 1133 at 230 °C and 2.16 kg, in the range from 4 to 30 g/10 min. Thus, the second heterophasic propylene-ethylene copolymer (HECO2) is characterized by a lower melt flow rate than the first heterophasic propylene-ethylene copolymer (HECO1). Preferably, the second heterophasic propylene-ethylene copolymer (HECO2) has a melt flow rate (MFR$_2$), determined according to ISO 1133 at 230 °C and 2.16 kg, in the range from 4 to 25 g/10 min, preferably from 4 to 20 g/10 min, and more preferably from 5 to 15 g/10 min, like in the range of 5 to 10 g/10 min.

The crystalline matrix phase of the second heterophasic propylene-ethylene copolymer (HECO2) may have a melt flow rate (MFR$_2$), determined according to ISO 1133 at 230 °C and 2.16 kg, in the range of 15 to 150 g/10 min, preferably 20 to 140 g/10 min, and more preferably in the range of 25 to 75 g/10 min, like in the range of 25 to 50 g/10 min.

The second heterophasic propylene-ethylene copolymer (HECO2) may have a melting temperature Tm, determined by differential scanning calorimetry (DSC), in the range of from 150 to 170°C, preferably 155 to 168°C, and more preferably 162 to 168°C.

The second heterophasic propylene-ethylene copolymer (HECO2) may be further defined by specific characteristics that are determined according to CRYSTEX QC analysis, preferably using trichlorobenzene as solvent.

The second heterophasic propylene-ethylene copolymer (HECO2) may have an ethylene content (C2(total)), determined by FT-IR spectroscopy calibrated by quantitative $^{13}$C-NMR spectroscopy, in the range from 4.5 to 25.0 wt.-%, preferably in the range from 5.5 to 22.0 wt.-%, and more preferably in the range from 6.0 to 20.0 wt.-%, relative to the total weight of the second heterophasic propylene-ethylene copolymer (HECO2).

The second heterophasic propylene-ethylene copolymer (HECO2) has a soluble fraction (SF) content, determined according to CRYSTEX QC analysis, in the range from 17.0 to 40.0 wt.-%, relative to the total weight of the second heterophasic propylene-ethylene copolymer (HECO2). Preferably, the second heterophasic propylene-ethylene copolymer (HECO2) has a soluble fraction (SF) content, determined according to CRYSTEX QC analysis, in the range from 18.0 to 38.0 wt.-%, preferably 19.0 to 35.0 wt.-%, and more preferably 19.0 to 33.0 wt.-%, relative to the total weight of the second heterophasic propylene-ethylene copolymer (HECO2).

The intrinsic viscosity, determined according to DIN ISO 1628/1, of the soluble fraction content (iV(SF)), according to CRYSTEX QC analysis, may be in the range from 2.0 to 7.0 dL/g, preferably from 2.5 to 6.8 dL/g, and more preferably from 3.5 to 6.5 dL/g.

The soluble fraction (SF) may have an ethylene content (C2(SF)), determined by FT-IR spectroscopy calibrated by quantitative $^{13}$C-NMR spectroscopy, in the range from 20.0 to 50.0 wt.-%, preferably in the range from 20.0 to 45.0 wt.-%, and more preferably in the range from 21.0 to 40.0 wt.-%, relative to the total weight of the soluble fraction (SF) of the second heterophasic propylene-ethylene copolymer (HECO2).

In one preferred embodiment, the second heterophasic propylene-ethylene copolymer (HECO2) has:

- a soluble fraction (SF) content, determined according to CRYSTEX QC analysis, in the range from 18.0 to 38.0 wt.-%, preferably 19.0 to 35.0 wt.-%, and more preferably 19.0 to 33.0 wt.-%, relative to the total weight of the second heterophasic propylene-ethylene copolymer (HECO2), and

- an intrinsic viscosity, determined according to DIN ISO 1628/1, of the soluble fraction content (iV(SF)), according to CRYSTEX QC analysis, in the range from 2.0 to 7.0 dL/g, preferably from 2.5 to 6.8 dL/g, and more preferably from 3.5 to 6.5 dL/g.

In one more preferred embodiment, the second heterophasic propylene-ethylene copolymer (HECO2) has:

- a soluble fraction (SF) content, determined according to CRYSTEX QC analysis, in the range from 18.0 to 38.0 wt.-%, preferably 19.0 to 35.0 wt.-%, and more preferably 19.0 to 33.0 wt.-%, relative to the total weight of the second heterophasic propylene-ethylene copolymer (HECO2),
- an intrinsic viscosity, determined according to DIN ISO 1628/1, of the soluble fraction content (iV(SF)), according to CRYSTEX QC analysis, in the range from 2.0 to 7.0 dL/g, preferably from 2.5 to 6.8 dL/g, and more preferably from 3.5 to 6.5 dL/g, and
- the soluble fraction (SF) has an ethylene content (C2(SF)), determined by FT-IR spectroscopy calibrated by quantitative $^{13}$C-NMR spectroscopy, in the range from 20.0 to 50.0 wt.-%, preferably in the range from 20.0 to 45.0 wt.-%, and more preferably in the range from 21.0 to 40.0 wt.-%, relative to the total weight of the soluble fraction (SF) of the second heterophasic propylene-ethylene copolymer (HECO2).

The second heterophasic propylene-ethylene copolymer (HECO2) has a crystalline fraction (CF) content, determined according to CRYSTEX QC analysis, in the range from 60.0 to 83.0 wt.-%, preferably 62.0 to 82.0 wt.-%, and more preferably 65.0 to 81.0 wt.-%, relative to the total weight of the second heterophasic propylene-ethylene copolymer (HECO2).

The crystalline fraction (CF) may have an ethylene content (C2(CF)), determined by FT-IR spectroscopy calibrated by quantitative $^{13}$C-NMR spectroscopy, in the range from 1.0 to 10.0 wt.-%, preferably in the range from 1.5 to 9.0 wt.-%, and more preferably in the range from 2.0 to 6.0 wt.-%, relative to the total weight of the crystalline fraction (CF) of the second heterophasic propylene-ethylene copolymer (HECO2).

The intrinsic viscosity, determined according to DIN ISO 1628/1, of the crystalline fraction content (iV(CF)), according to CRYSTEX QC analysis, may be in the range from 1.0 to 3.5 dL/g, preferably 1.1 to 3.0 dL/g, and more preferably 1.2 to 2.5 dL/g.

In one preferred embodiment, the second heterophasic propylene-ethylene copolymer (HECO2) has:

- a crystalline fraction (CF) content, determined according to CRYSTEX QC analysis in the range from 60.0 to 83.0 wt.-%, preferably 62.0 to 82.0 wt.-%, and more preferably 65.0 to 81.0 wt.-%, like in the range of 74.0 to 81.0 wt.-%, relative to the total weight of the second heterophasic propylene-ethylene copolymer (HECO2),
- a crystalline fraction (CF) having an ethylene content (C2(CF)), determined by FT-IR spectroscopy calibrated by quantitative $^{13}$C-NMR spectroscopy, in the range from 1.0 to 10.0 wt.-%, preferably in the range from 1.5 to 9.0 wt.-%, and more preferably in the range from 2.0 to 6.0 wt.-%, relative to the total weight of the crystalline fraction (CF) of the second heterophasic propylene-ethylene copolymer (HECO2), and
- an intrinsic viscosity, determined according to DIN ISO 1628/1, of the crystalline fraction content (iV(CF)), according to CRYSTEX QC analysis, 1.0 to 3.5 dL/g, preferably 1.1 to 3.0 dL/g, and more preferably 1.2 to 2.5 dL/g.

The second heterophasic propylene-ethylene copolymer (HECO2) may be characterized by a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, in the range of from 1.2 to 6.0, preferably from 1.5 to 5.0, and more preferably in the range of from 2.0 to 4.0, the intrinsic viscosity being determined according to DIN ISO 1628/1.

In one preferred embodiment, the second heterophasic propylene-ethylene copolymer (HECO2) has:

- a soluble fraction (SF) content, determined according to CRYSTEX QC analysis, in the range from 18.0 to 38.0 wt.-%, preferably 19.0 to 35.0 wt.-%, and more preferably 19.0 to 33.0 wt.-%, relative to the total weight of the second heterophasic propylene-ethylene copolymer (HECO2),
- a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, in the range of from 1.2 to 6.0, preferably from 1.5 to 5.0, and more preferably in the range of from 2.0 to 4.0, the intrinsic viscosity being determined according to DIN ISO 1628/1, and
- the soluble fraction (SF) has an ethylene content (C2(SF)), determined by FT-IR spectroscopy calibrated by quantitative $^{13}$C-NMR spectroscopy, in the range from 20.0 to 50.0 wt.-%, preferably in the range from 20.0 to 45.0 wt.-%, and more preferably in the range from 21.0 to 40.0 wt.-%, relative to the total weight of the soluble fraction (SF) of the second heterophasic propylene-ethylene copolymer (HECO2).

Additionally or alternatively, the second heterophasic propylene-ethylene copolymer (HECO2) may be characterized by its xylene cold solubles (XCS) fraction.

The second heterophasic polypropylene copolymer (HECO2) may have one or both of, preferably both of:

- a xylene cold soluble (XCS) content, determined at 25 °C according ISO 16152, in the range of 18.0 to 42.0 wt.-%, preferably 19.0 to 40.0 wt.-%, and more preferably 20.0 to 36.5 wt.-%, based on the overall weight of the second heterophasic polypropylene copolymer (HECO2), and
- an intrinsic viscosity (IV) determined according to DIN ISO 1628/1 in decalin at 135°C of the XCS fraction in the range of from 2.0 to 7.0 dl/g, preferably 2.1 to 6.8 dl/g, and more preferably 3.5 to 6.5 dl/g.

The second heterophasic polypropylene copolymer (HECO2) is typically obtainable by a Ziegler-Natta-catalyst based polymerization process. The process is typically carried out in a sequential polymerization reactor, like a loop reactor connected to two or more gas phase reactors. An example for such a process is described in detail herein below in the section "Experimental section".

The second heterophasic polypropylene copolymer (HECO2) is a material that is known in the art and commercially available.

### 1.4 The ethylene-based elastomer

The composite material further comprises an ethylene-based elastomer. The ethylene-based elastomer is a copolymer of ethylene and an alpha-olefin co-monomer having from 4 to 12 carbon atoms. Preferably, the ethylene-based elastomer is a copolymer of ethylene and an alpha-olefin co-monomer having from 4 to 8 carbon atoms. More preferably, the ethylene-based elastomer is a copolymer of ethylene and 1-octene.

In one preferred embodiment, the ethylene-based elastomer is a copolymer of ethylene and 1-octene having a content of units derived from 1-octene in the range of 15 to 55 wt.-%, and preferably in the range of 20 to 50 wt.-%, based on the overall weight of the ethylene-based elastomer.

The composite material comprises the ethylene-based elastomer in an amount of from 5.0 to 15.0 wt.-%, preferably from 6.0 to 13.0 wt.-%, more preferably 6.5 to 12.0 wt.-%, and even more preferably 7.0 to 11.0 wt.-%, relative to the total weight of the composite material.

The ethylene-based elastomer has a density in the range from 850 to 900 kg/m$^3$, preferably in the range of from 855 to 895 kg/m$^3$, more preferably in the range of from 856 to 890 kg/m$^3$, like in a range of 856 to 880 kg/m$^3$.

The ethylene-based elastomer may have a melt a melt flow rate (MFR$_2$), determined according to ISO 1133 at 190°C and 2.16 kg, in the range from 0.5 to 30 g/10 min, and preferably in a range of 0.8 to 25 g/10 min, like in a range of 0.8 to 15 g/10 min, 0.8 to 10 g/10 min or 0.8 to 5 g/10 min.

Ethylene-based elastomers as described herein are known in the art as such and are commercially available. For example, one suitable ethylene-based elastomer is the ethylene-octene copolymer available under the tradename "Engage 8842" from the Dow Chemical Company.

A skilled person is also aware how the ethylene-based elastomers described herein may be prepared. Preparation processes may be, but are not limited to, polymerizing ethylene and 1-octene in the presence of a metallocene catalyst in a gas phase reactor.

1.5 The bamboo-based fibers

The composite material further comprises bamboo-based fibers. The bamboo-based fibers are present in an amount from 5.0 to 30.0 wt.-%, preferably from 8.0 to 28.0 wt.-%, more preferably from 10.0 to 26.0 wt.-%, and even more preferably from 12.0 to 22.0 wt.-%, relative to the total weight of the composite material.

The bamboo-based fibers may be any type of bamboo-based fibers including, but not limited to, fiber bundles or fiber strands, each of which typically comprising a plurality of elementary bamboo fibers. The bamboo-based fibers may be derived from any type of bamboo parts which are suitable for extracting bamboo-based fibers. For example, the bamboo-based fibers may be prepared from the culm of a bamboo, like the culm of a bamboo from one of the bamboo subfamilies *Bambusa, Dendrocalamus, Gigantochloa, Guadua* and *Phyllostachys.* The bamboo-based fibers may be bamboo-based fibers that are obtained from bamboo parts, like parts of bamboo culm, by a mechanical and/or thermo-mechanical process. Such processes are known in the art. A device and a process for mechanically obtaining bamboo-based fibers from bamboo parts is described in, for example, WO2019/093898 A2 (see e.g.,: p. 47, l. 23 - p. 57, l. 15).

In one preferred embodiment, the bamboo-based fibers are formed or obtained from bamboo, like from bamboo parts, by a mechanical and/or thermo-mechanical process. A "mechanical and/or thermo-mechanical process" does not contain one or more chemical treatment steps for removing specific components from the fibers, like chemical treatment steps used for preparing cellulose fiber for paper making.

The bamboo-based fibers may have an average length, preferably a weight-based average length, in the range of 0.5 to 10 mm, preferably 0.5 to 7.5 mm, more preferably in the range of 0.7 to 7.0 mm, and even more preferably in the range of 0.8 to 6.5 mm. The average fiber length, like the weight-based average fiber length, is preferably determined according to FASEP analysis. FASEP analysis is also described herein below in the section "Measuring methods".

In one embodiment, the bamboo-based fibers being present in the composite material are obtained from bamboo-based fibers having an average length, preferably a weight-based average length, in the range of 0.5 to 10 mm, preferably 0.5 to 7.5 mm, more preferably in the range of 0.7 to 7.0 mm, and even more preferably in the range of 0.8 to 6.5 mm. In one embodiment, the bamboo-based fibers being present in the composite material are obtained by melt-compounding bamboo-based fibers having an average length, preferably a weight-based average length, in the range of 0.5 to 10 mm, preferably 0.5 to 7.5 mm, more preferably in the range of 0.7 to 7.0 mm, and even more preferably in the range of 0.8 to 6.5 mm, together with the other components of the composite material.

The bamboo-based fibers described herein are known in the art as such and are commercially available, for example, from the company Bambooder Biobased Fibers B.V.

1.6 The compatibilizer

The composite material further comprises a compatibilizer. The compatibilizer is present in the composite material in an amount from 1.0 to 5.0 wt.-%, preferably from 1.0 to 5.0 wt.-%, more preferably from 1.5 to 4.5 wt.-%, and even more preferably from 2.0 to 4.0 wt.-%, relative to the total weight of the composite material.

The compatibilizer is a polar modified polypropylene or a polar modified elastomer, like a polar modified ethylene elastomer. Preferably, the compatibilizer is a polar modified polypropylene. The polar modified polypropylene may be a polar modified propylene homo- or copolymer.

The polar modified propylene homo- or copolymer may be a polar propylene homo- or copolymer comprising polar groups selected from the group consisting of acid anhydrides, carboxylic acids, carboxylic acid derivatives, primary and secondary amines, hydroxyl compounds, oxazoline and epoxides, ionic compounds, and combinations thereof.

The polar modified propylene homo- or copolymer may be a propylene homo- or copolymer grafted with polar compounds. Specific examples of said polar compounds for grafting are unsaturated cyclic anhydrides and their aliphatic diesters, and the diacid derivatives, such as, but not limited to, maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

The polar modified propylene homo- or copolymer may comprise polar groups in an amount from 0.5 to 5.0 wt.-%, based on the total weight of the polar modified propylene homo- or copolymer. For example, the amount may be in the range of 0.5 wt.-% to 4.5 wt.-%, preferably in the range of 0.5 wt.-% to 4.0 wt.-%, more preferably in the range of 0.5 wt.-% to 3.5 wt.-%.

Preferably, the compatibilizer is a polar modified propylene homo- or copolymer, wherein the polar modified propylene homo- or copolymer is a propylene homo- or copolymer grafted with maleic anhydride and/or acrylic acid, and more preferably maleic anhydride.

A propylene homo- or copolymer grafted with a polar compound (e.g., maleic anhydride and/or acrylic acid) may be produced in a simple manner by reactive extrusion of the polymer with the polar graft compound in the presence of free radical generators (like organic peroxides), as disclosed for instance in US 4,506,056, US 4,753,997 or EP 1 805 238.

The melt flow rate $MFR_2$ (230 °C, 2.16 kg) of the compatibilizer, preferably the polar modified propylene homo- or copolymer, may be at least 20 g/10 min, and preferably in the range of from 25.0 to 250 g/10 min, like in a range of 40.0 to 100 g/10 min. According to one preferred embodiment, the compatibilizer is a polar modified propylene homo- or copolymer, which is a propylene homo- or copolymer being grafted with maleic anhydride and having a melt flow rate $MFR_2$ (230 °C, 2.16 kg) determined according to ISO 1133 in the range of 20.0 g/10 min to 250 g/10 min.

Compatibilizers as described herein are known in the art as such and are commercially available on the market.

1.7 The high density polyethylene

A high density polyethylene is an optional component of the composite material of the invention, however, it is preferred that the composite material comprises a high density polyethylene.

The high density polyethylene may be present in an amount from 0.1 to 15.0 wt.-%, preferably from 1.0 to 15.0 wt.-%, more preferably from 2.0 to 12.0 wt.-%, and even more preferably from 5.0 to 11.0 wt.-%, relative to the total weight of the composite material.

The high density polyethylene preferably has a density in the range of 945 to 965 kg/m3, and more preferably in the range of from 948 to 962 kg/m$^3$.

The high density polyethylene may have a melt flow rate ($MFR_2$), determined according to ISO 1133 at 190°C and 2.16 kg, in the range from 0.5 to 30 g/10 min, preferably from 1.0 to 30 g/10 min, and more preferably from 2.0 to 20 g/10 min, like in the range of 2.0 to 10 g/10 min.

According to one preferred embodiment, the high density polyethylene preferably has a density in the range of 945 to 965 kg/m3, and more preferably in the range of from 948 to 962 kg/m$^3$, and a melt flow rate ($MFR_2$), determined according to ISO 1133 at 190°C and 2.16 kg, in the range from 0.5 to 30 g/10 min, preferably from 1.0 to 30 g/10 min, and more preferably from 2.0 to 20 g/10 min, like in the range of 2.0 to 10 g/10 min.

High density polyethylene as described herein is known in the art as such and is commercially available. The skilled person also knows in view of its common knowledge how to make such materials.

1.8 The additives

The composite material comprises additives. The additives may be present in the composite material in an amount in the range of from 0.1 to 5.0 wt.-%, preferably from 0.2 to 5.0 wt.-%, more preferably 0.3 to 5.0 wt.-%, and even more preferably 0.4 to 5.0 wt.-%, like in the range of 0.4 to 4.0 wt.% or 0.4 to 3.0 wt.%, relative to the total weight of the composite material.

Typical additives are acid scavengers, antioxidants, colorants, (UV) light stabilisers, plasticizers, slip agents, anti-scratch agents, mold release agents, nucleating agents, dispersing agents, processing aids, lubricants, pigments, and the like. In one embodiment, the additives are selected from the group consisting of acid scavengers, antioxidants, colorants, (UV) light stabilisers, plasticizers, slip agents, anti-scratch agents, mold release agents, nucleating agents, dispersing agents, processing aids, lubricants and pigments. Such additives are commercially available and for example described in "Plastic Additives Handbook", 6th edition 2009 of Hans Zweifel (pages 1141 to 1190).

Typically, the additives being present in the composite material comprise one or more antioxidants. For example, the one or more antioxidants being part of the additives may be present in an amount in the range of 0.1 to 1.5 wt.%, 0.2 to 1.2 wt.%, 0.3 to 1.0 wt.%, or 0.4 to 1.0 wt.%, based on the total weight of the composite material.

Furthermore, the additives may include carrier materials, in particular polymeric carrier materials. Said polymeric carrier material may be part of an additives masterbatch. The polymeric carrier material may ensure a good distribution of the additives in the composite material during preparation, e.g., by melt compounding. The polymeric carrier material is not limited to a particular polymer. The polymeric carrier material may be ethylene homopolymer, ethylene copolymer obtained from ethylene and α-olefin comonomer such as C3 to C8 α-olefin comonomer, propylene homopolymer and/or propylene copolymer obtained from propylene and α-olefin comonomer such as ethylene and/or C4 to C8 α-olefin comonomer.

A large variety of commercial additive masterbatches, including masterbatches comprising one or more of the above-described additives, are available in the art. A skilled person also knows how to prepare an additive masterbatch, e.g., by compounding a carrier polymer with one or more additives of choice.

2. Injection molded article

Another aspect of the present invention provides an injection molded article comprising the composite material as defined herein.

The injection molded article may comprise at least 60 wt.-%, more preferably at least 80 wt.-%, still more preferably at least 90 wt.-%, like at least 95 wt.-% or at least 99 wt.-%, of the composite material as defined herein, based on the total weight of the injection molded article. In one particular embodiment, the injection molded article essentially consists of or consists of the composite material.

Preferably, the injection molded article is for manufacturing applications, like automotive manufacturing. Thus, it is preferred that the injection molded article is an injection molded automotive article.

### 3. Use of bamboo-based fibers

Yet another aspect of the present invention provides a use of bamboo-based fibers for reinforcing a polypropylene-based composition or an injection molded part comprising a polypropylene-based composition, wherein the polypropylene-based composition comprises

(i) a first heterophasic propylene-ethylene copolymer (HECO1) having a melt flow rate (MFR$_2$), determined according to ISO 1133 at 230 °C and 2.16 kg, in the range from 60 to 200 g/10 min,
(ii) a second heterophasic propylene-ethylene copolymer (HECO2) having

- a melt flow rate (MFR$_2$), determined according to ISO 1133 at 230 °C and 2.16 kg, in the range from 4 to 30 g/10 min, and
- a soluble fraction (SF), determined according to CRYSTEX QC analysis, in the range from 17.0 to 40.0 wt.-%, relative to the total weight of the second heterophasic propylene-ethylene copolymer (HECO2),

(iii) an ethylene-based elastomer being a copolymer of ethylene and an alpha-olefin co-monomer having from 4 to 12 carbon atoms and having a density in the range from 850 to 900 kg/m$^3$,
(iv) a compatibilizer being a polar modified polypropylene or a polar modified elastomer,
(v) optionally a high density polyethylene, and
(vi) optionally additives.

The bamboo-based fibers, the first heterophasic propylene-ethylene copolymer (HECO1), the second heterophasic propylene-ethylene copolymer (HECO2), the ethylene-based elastomer, the compatibilizer, the optional high density polyethylene, and the optional additives are preferably as defined herein above. Preferably, the high density polyethylene is present in the polypropylene-based composition.

The reinforcing of the polypropylene-based composition preferably provides for an improvement of mechanical properties, like tensile and impact properties, of the polypropylene-based composition. The reinforcing of the polypropylene-based composition may be characterized by an increased tensile strength, (preferably determined according to ISO 527-2) and/or tensile modulus (preferably determined according to ISO 527-1A). The increase of tensile strength and/or tensile modulus of the polypropylene-based composition may be determined by comparison with a polypropylene-based composition that is (essentially) identical in terms of components and their relative to amounts with the exception that bamboo-based fibers are not present.

Bamboo-based fibers are typically used in conjunction with the polypropylene-based composition in a melt-blending and/or melt-compounding process in an extruder, like a (twin) screw extruder. The use of the bamboo-based fibers results in the formation of a composite material, preferably a composite material as defined herein.

In the following, the present invention is described by specific examples, which are however not to be understood as limiting the invention in any way.

### 4. Experimental section

4.1 Measuring methods

The properties of the starting materials and composite materials were determined using the following measuring methods. The measuring methods also apply for the above general description unless otherwise defined.

4.1.1 Melt flow rate (MFR)

The melt flow rates MFR$_2$ were measured according to ISO 1133 with a load of 2.16 kg at 230 °C or 190°C as indicated in parenthesis for the defined parameter. The melt flow rate is that quantity of polymer in grams which the test apparatus standardised to ISO 1133 extrudes within 10 minutes at a temperature of 230 °C, respectively 190 °C, under a load of 2.16 kg.

4.1.2 CRYSTEX QC analysis (crystalline and soluble fractions method)

The crystalline (CF) and soluble fractions (SF) of polypropylene compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions were separated through temperature cycles of dissolution at 160°C, crystallization at 40°C and re-dissolution in 1,2,4-trichlorobenzene at 160°C. Quantification of SF and CF and determination of ethylene content (C2) were achieved by means of an integrated infrared detector (IR4) and for the determination of the intrinsic viscosity (IV) an online 2-capillary viscometer was used. The IR4 detector was a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector was calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

$$(Equation\ 1)$$

$$CH_3/1000C = a + b*Abs(CH) + c* Abs(CH_3) + d * (Abs(CH_3)/Abs(CH)) + e * (Abs(CH_3)/Abs(CH))^2$$

$$(Equation\ 2)$$

The constants a to e for equation 1 and a to f for equation 2 were determined by using least square regression analysis. The CH3/1000C was converted to the ethylene content in wt.-% using following relationship:

$$Wt.\text{-}\% \ (Ethylene\ in\ EP\ Copolymers) = 100 - CH_3/1000TC * 0.3$$

$$(Equation\ 3)$$

Amounts of Soluble Fraction (SF) and Crystalline Fraction (CF) were correlated through the XS calibration to the "Xylene Cold Soluble" (XCS) quantity and respectively Xylene Cold Insoluble (XCI) fractions, determined according to standard gravimetric method as per ISO16152. XS calibration was achieved by testing various EP copolymers with XS content in the range 2-31 wt.-%. The determined XS calibration was linear:

$$Wt.\text{-}\% \ XS = 1,01* \ Wt.\text{-}\% \ SF$$

$$(Equation\ 4)$$

Intrinsic viscosity (IV) of the parent EP copolymer and its soluble and crystalline fractions were determined with a use of an online 2-capillary viscometer and are correlated to corresponding IV's determined by standard method in decalin according to ISO 1628-3. Calibration was achieved with various EP PP copolymers with IV = 2-4 dL/g. The determined calibration curve was linear:

$$IV \ (dL/g) = a* \ Vsp/c$$

$$(Equation\ 5)$$

The samples to be analyzed were weighed out in concentrations of 10 mg/ml to 20 mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample was dissolved at 160°C until complete dissolution was achieved, usually for 60 min, with constant stirring of 400 rpm. To avoid sample degradation, the polymer solution was blanketed with the $N_2$ atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

4.1.3 Intrinsic viscosity

The intrinsic viscosity (iV) was measured according to DIN ISO 1628/1, October 1999, in Decalin at 135°C.

4.1.4 Xylene cold solubles (XCS)

The xylene soluble fraction at room temperature (XCS, wt.-%) was determined at 25 °C according to ISO 16152; 5th edition; 2005-07-01.

4.1.5 Density

The density was measured according to ISO 1183-187. Sample preparation is done by compression molding in accordance with ISO 1873-2:2007.

4.1.6 Charpy notched impact strength (NIS)

The Charpy notched impact strength (NIS) was measured according to ISO 179 1eA at +23°C or -20 °C, using injection molded bar test specimens of $80 \times 10 \times 4 \, mm^3$ prepared in accordance with ISO 19069-2 using a melt temperature of 230°C for all materials irrespective of material melt flow rate.

4.1.7 Melting temperature ($T_m$) and crystallization temperature ($T_c$)

Melting temperature (Tm) and crystallization temperature (Tc) were measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (Tc) was determined from the cooling step, while melting temperature (Tm) was determined from the second heating step.

4.1.8 Flexural properties

The flexural modulus and the flexural strength were determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection molding was carried out according to ISO 19069-2 using a melt temperature of 230°C for all materials irrespective of material melt flow rate.

4.1.9 Tensile properties

Tensile properties were determined on injection molded dogbone specimens of 4 mm thickness prepared in accordance with EN ISO 1873-2. Tensile modulus was determined according to ISO 527-1A at a strain rate of 1 mm/min and 23°C, tensile strength and elongation (strain) at break were determined according to ISO 527-2 at a strain rate of 50 mm/min and 23°C.

4.1.10 Fiber dimension analysis

The dimension of the bamboo-based fibers was determined prior to compounding, i.e., prior to preparing the composite material. Weight average fiber length and fiber length distribution were determined according to the FASEP (FAser (German; fiber) SEParation) method. The fibers were suspended in ethanol and the suspension was diluted until the number of fibers and the overlaying of fibers was well balanced. In that regard, a fiber to water fraction was adjusted to equal or below 15 mg/L to obtain images with a number of fiber clusters being below 20% in relation to all fibers. The average fiber length was determined by grey scale image processing on a FASEP 1.9.44.0 (IDM Systems, Darmstadt, Germany) and statistically investigated by calculating average fiber length and fiber length distributions. For evaluation of the images, the FASEP software (ImageProPlus including FASEP module) was used separating fibers from background, removing dust (i.e. particles below 10 $\mu$m) and other not relevant features, separating fibers (if overlaying) and measuring automatically the length for each fiber.

The average fiber length Ln and weight average fiber length Lp was determined according to ISO 22314:05:2006 using the following equations A to C:

$$Lp = \frac{\overline{L^2}}{\overline{L}}$$

(Equation A)

$$Ln = \frac{1}{n}\sum_{i=1}^{n} L_i$$

(Equation B)

$$\overline{L^2} = \frac{1}{n}\sum_{i=1}^{n} L_i^2$$

(Equation C).

Average diameter values were calculated in an analogous way allowing a calculation of an number-based or weight-based average aspect ratio.

4.2 Starting materials

The following components were used as starting materials to prepare the composite materials:

4.2.1 Synthesis of heterophasic propylene-ethylene copolymers (HECOs)

The catalyst used for producing HECOL was a Ziegler-Natta catalyst commercially available from Lyondell Basell (IT), under the trade name ZN180M.

The catalyst used for producing HECO2 was a Ziegler-Natta catalyst from Borealis having Ti-content of 1.9 wt.-% (as described in EP 0 591 224). Before the polymerization, the catalyst was prepolymerized with vinyl-cyclohexane (VCH) as described in EP 1 028 984 and EP 1 183 307. The ratio of VCH to catalyst of 1:1 was used in the preparation, thus the final poly-VCH content was less than 100 ppm.

In the first stage the catalyst described above was fed into prepolymerization reactor together with propylene and small amount of hydrogen (2.5 g/h) and ethylene (330 g/h). Triethylaluminium as a cocatalyst and dicyclopentyldimethoxysilane as a donor was used. The aluminium to donor ratio was 7.5 mol/mol and aluminium to titanium ratio was 300 mol/mol. Reactor was operated at a temperature of 30 °C and a pressure of 55 bar.

The subsequent polymerization has been effected under the conditions as described in Table 1 below.

**Table 1** Polymerization conditions for the HECOs

|  |  | HECO1 | HECO2 |
|---|---|---|---|
| Co/ED | [mol/mol] | 10 | 3 |
| Co/Ti | [mol/mol] | 220 | 200 |
| Temperature | [°C] | 30 | 30 |

(continued)

| | | HECO1 | HECO2 |
|---|---|---|---|
| Residence time | [min] | 5 | 15 |
| **Loop reactor** | | | |
| Temperature | [°C] | 75 | 85 |
| Split | [wt.-%] | 52 | 35 |
| H2/C3 | [mol/kmol] | 22.00 | 35.0 |
| MFR$_2$ | [g/10min] | 160 | 140 |
| **1$^{st}$ Gas phase reactor** | | | |
| Temperature | [°C] | 80 | 85 |
| Split | [wt.-%] | 34 | 40 |
| H2/C3 | [mol/kmol] | 175.0 | 21.2 |
| MFR$_2$ | [g/10min] | 160 | 55 |
| MFR(GPR1) | [g/10min] | 160 | 30 |
| XCS | [wt.-%] | 2.0 | 1.9 |
| **2$^{nd}$ Gas phase reactor** | | | |
| Temperature | [°C] | 80 | 70 |
| C2/C3 | [mol/kmol] | 550.0 | 210.0 |
| H2/C2 | [mol/kmol] | 250.0 | 15.0 |
| Split | [wt.-%] | 14 | 15 |
| C2 | [wt.-%] | 99.0 | 4.5 |
| MFR$_2$ | [g/10min] | 100 | 20 |
| **3$^{rd}$ Gas phase reactor** | | | |
| Temperature | [°C] | - | 85 |
| C2/C3 | [mol/kmol] | - | 210.0 |
| H2/C2 | [mol/kmol] | - | 10.0 |
| Split | [wt.-%] | - | 10 |
| C2 | [wt.-%] | - | 7 |
| MFR$_2$ | [g/10min] | - | 5.5 |

Table 2 shows the properties of HECOL and HECO2.

Table 2:

| | | HECO1 | HECO2 |
|---|---|---|---|
| **Pellet** | | | |
| XCS | [wt.-%] | 15 | 22.7 |
| C2(XCS) | [wt.-%] | 54 | 22.6 |
| iV(XCS) | [dl/g] | 2.0 | 6.2 |
| MFR$_2$ | [g/10min] | 100 | 5.5 |
| Tm | [°C] | 165 | 166 |

(continued)

| | | HECO1 | HECO2 |
|---|---|---|---|
| **Pellet** | | | |
| Tc | [°C] | 121 | 115 |
| **CRYSTEX analysis** | | | |
| SF | [wt.-%] | 14.7 | 21.8 |
| C2 | [wt.-%] | 8.0 | 7.0 |
| C2(SF) | [wt.-%] | 39.5 | 23.3 |
| C2(CF) | [wt.-%] | 2.4 | 2.9 |
| IV | [dl/g] | 1.5 | 3.4 |
| IV(SF) | [dl/g] | 2.1 | 5.6 |
| IV(CF) | [dl/g] | 1.2 | 2.2 |
| IV(SF)/IV(CF) | - | 2.6 | 2.5 |
| | | | |
| **Mechanical properties** | | | |
| Flex. modulus | [MPa] | 1400 | 1050 |
| Charpy NIS 23°C | [kJ/m$^2$] | 3.2 | 48 |
| Charpy NIS -20°C | [kJ/m$^2$] | 1.8 | 6.3 |

The heterophasic copolymers HECOL and HECO2 were compounded in a co-rotating twin-screw extruder Coperion ZSK 47 at 220°C with 0.15 wt.-% antioxidant (Irganox B215FF from the company BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4) and 0.05 wt.-% of Ca-stearate (CAS-no.1592-23-0, commercially available from Faci, Italy).

4.2.2 Ethylene-based elastomer

Ethylene-1-octene elastomer, commercially available under the tradename "Engage 8842" from the company Dow Chemical, having a density of about 857 kg/m$^3$ and a melt flow rate MFR (190°C; 2.16 kg) of 1.0 g/10 min. It is further characterized by a content of units derived from 1-octene of about 45 wt.-% and a melting temperature of 38 °C.

4.2.3 Fibers/Fillers

F1: Bamboo fibers, commercially available from the company Bambooder Biobased Fibers B.V., weight-based average fiber length of 1200 μm (according to FASEP analysis).

F2: Bamboo fibers, commercially available from the company Bambooder Biobased Fibers B.V., weight-based average fiber length of 4.9 mm (according to FASEP analysis).

F3: Softwood fibers, commercially available under the tradename "Arbocel C100" from the company Rettenmaier & Söhne, weight-based average fiber length of 205 μm (according to FASEP analysis) and a weight-based fiber aspect ratio of 2.0 (according to FASEP analysis).

F4: Lyocell fibrous cellulose, commercially available under the tradename "Tencel" type FCP from the company Lenzing AG having a fiber length of about 300 μm and a fiber diameter of about 10 μm.

F5: Hemp fiber, commercially available from the company Schwarzwälder Textilwerke, having an average fiber length of 1 mm.

F6: Talc, commercially available under the trade name "Jetfine 3CA" from the company Imerys, with a volume-based median diameter d50 of about 4 $\mu$m and top cut diameter d95 of about 10 $\mu$m, as measured by laser diffraction.

4.2.4 Compatibilizer

Polypropylene functionalized with maleic anhydride, commercially available under the tradename "SCONA TPPP 8112 GA" by the company BYK Kometra, having a maleic anhydride content of 1.4 wt.-% and an MFR (ISO1133, 230 °C, 2.16 kg) about 80 g/10 min.

4.2.5 High density polyethylene (HDPE)

High density polyethylene (HDPE) was a commercial grade having a density of 954 kg/m$^3$ (ISO 1183), $MFR_2$ (ISO1133, 190°C, 2.16 kg) of 4 g/10min and a tensile modulus of 850 MPa (ISO 527-2).

4.2.6 Additives

ADD1 : ADK Stab LA-408X, synergistic UV stabilizer masterbatch, commercially available from Adeka, France.

ADD2: antioxidant with a tradename of Irganox 1010 (pentaerythrityl-tetrakis(3-(3',5'-di-tert. butyl-4-hydroxyphenyl)-propionate, CAS-no. 6683-19-8), commercially available from BASF AG, Germany.

ADD3: antioxidant with a trade name of Irgafos 168 (tris (2,4-di-t-butylphenyl) phosphite, CAS-no. 31570-04-4), available from BASF AG, Germany.

4.3 Examples of composite materials

Composite materials IE1 and IE2 and CE1 to CE5 were prepared based on the formulation recipes shown in Tables 3a and 3b below. The composite materials were obtained by cold dry blending pellets of HECO1, HECO2, HDPE and fibers, followed by melting blending the components in a twin screw extruder Brabender DSE20 with soft mixing elements at temperatures of 180-200 °C. Elastomer and compatabilizer were dosed into extruder during melt blending.

Table 3a:

| Example no. | | IE1 | IE2 | CE1 | CE2 |
|---|---|---|---|---|---|
| | | | | | |
| **Composition** | | | | | |
| HECOL | [wt.-%] | 38.6 | 38.6 | 81.6 | 38.6 |
| HECO2 | [wt.-%] | 24 | 24 | - | 24 |
| HDPE | [wt.-%] | 9 | 9 | - | 9 |
| Elastomer | [wt.-%] | 10 | 10 | - | 10 |
| Compatibilizer | [wt.-%] | 3 | 3 | 3 | 3 |
| Additives | | | | | |
| ADD1 | [wt.-%] | 0.2 | 0.2 | 0.2 | 0.2 |
| ADD2 | [wt.-%] | 0.1 | 0.1 | 0.1 | 0.1 |
| ADD3 | [wt.-%] | 0.1 | 0.1 | 0.1 | 0.1 |
| Fiber/Filler | | | | | |
| F1 | [wt.-%] | 15 | - | 15 | - |
| F2 | [wt.-%] | - | 15 | - | - |

(continued)

| Composition | | | | | |
|---|---|---|---|---|---|
| F3 | [wt.-%] | - | - | - | - |
| F4 | [wt.-%] | - | - | - | 15 |
| F5 | [wt.-%] | - | - | - | - |
| F6 | [wt.-%] | - | - | - | - |
| | | | | | |
| **Properties** | | | | | |
| MFR | [g/10min] | 10.5 | 8.8 | 14.2 | 12.5 |
| Density | [kg/m³] | 953 | 971 | 959 | 957 |
| Tensile modulus | [MPa] | 2037 | 2010 | 3067 | 1522 |
| Tensile strength | [MPa] | 25.1 | 24.0 | 33.6 | 22.6 |
| Flexural modulus | [MPa] | 1720 | 1635 | 2356 | 1502 |
| Flexural strength | [MPa] | 34.2 | 33.6 | 38.2 | 31.8 |
| Charpy NIS 23°C | [kJ/m²] | 18.5 | 20.9 | 3.3 | 10.4 |

Table 3b:

| Example no. | | CE3 | CE4 | CE5 |
|---|---|---|---|---|
| | | | | |
| **Composition** | | | | |
| HECOL | [wt.-%] | 38.6 | 38.6 | 38.6 |
| HECO2 | [wt.-%] | 24 | 24 | 24 |
| HDPE | [wt.-%] | 9 | 9 | 9 |
| Elastomer | [wt.-%] | 10 | 10 | 10 |
| Compatibilizer | [wt.-%] | 3 | 3 | 3 |
| Additives | | | | |
| ADD1 | [wt.-%] | 0.2 | 0.2 | 0.2 |
| ADD2 | [wt.-%] | 0.1 | 0.1 | 0.1 |
| ADD3 | [wt.-%] | 0.1 | 0.1 | 0.1 |
| Fiber/Filler | | | | |
| F1 | [wt.-%] | - | - | - |
| F2 | [wt.-%] | - | - | - |
| F3 | [wt.-%] | - | - | - |
| F4 | [wt.-%] | 15 | - | - |
| F5 | [wt.-%] | - | 15 | - |
| F6 | [wt.-%] | - | - | 15 |
| | | | | |
| **Properties** | | | | |
| MFR | [g/10min] | 5.5 | 11.3 | 16.7 |

(continued)

| Properties | | | | |
|---|---|---|---|---|
| Density | [kg/m$^3$] | 964 | 961 | 1002 |
| Tensile modulus | [MPa] | 1421 | 1710 | 1588 |
| Tensile strength | [MPa] | 28.1 | 23.9 | 21.8 |
| Flexural modulus | [MPa] | 1370 | 1418 | 1451 |
| Flexural strength | [MPa] | 32.2 | 31.5 | 28.2 |
| Charpy NIS 23°C | [kJ/m$^2$] | 15.9 | 15.5 | 15.0 |

From the data shown in tables 3a and 3b, it can be seen that the use of bamboo-based fibers provides for an improvement in terms of mechanical properties, when compared to other natural fibrous material or talc. Further, it can be seen from a comparison of examples IE1 and CE1 that the inventive composite material provides for a very good balance of mechanical properties, whereas changing to a simple HECO matrix leads to a massive drop in impact strength.

**Claims**

1.  A composite material comprising, relative to the total weight of the composite material,

    (a) from 25.0 to 55.0 wt.-% of a first heterophasic propylene-ethylene copolymer (HECO1) having a melt flow rate (MFR$_2$), determined according to ISO 1133 at 230 °C and 2.16 kg, in the range from 60 to 200 g/10 min,
    (b) from 10.0 to 30.0 wt.-% of a second heterophasic propylene-ethylene copolymer (HECO2) having

    - a melt flow rate (MFR$_2$), determined according to ISO 1133 at 230 °C and 2.16 kg, in the range from 4 to 30 g/10 min, and
    - a soluble fraction (SF), determined according to CRYSTEX QC analysis, in the range from 17.0 to 40.0 wt.-%, relative to the total weight of the second heterophasic propylene-ethylene copolymer (HECO2),

    (c) from 5.0 to 15.0 wt.-% of an ethylene-based elastomer being a copolymer of ethylene and an alpha-olefin co-monomer having from 4 to 12 carbon atoms, and the ethylene-based elastomer having a density in the range from 850 to 900 kg/m$^3$,
    (d) from 5.0 to 30.0 wt.-% of bamboo-based fibers,
    (e) from 1.0 to 5.0 wt.-% of a compatibilizer being a polar modified polypropylene or a polar modified elastomer,
    (f) from 0.1 to 5.0 wt.-% of additives, and
    (g) optionally from 0.1 to 15.0 wt.-% of a high density polyethylene.

2.  The composite material according to claim 1, having a melt flow rate (MFR$_2$), determined according to ISO 1133 at 230 °C and 2.16 kg, in the range from 6 to 100 g/10 min, preferably in the range of 7 to 90 g/10 min, more preferably in the range of 8 to 80 g/10 min.

3.  The composite material according to claim 1 or 2, having a density of less than 1000 kg/m$^3$, and preferably in the range of 900 to 990 kg/m$^3$.

4.  The composite material according to any one of the preceding claims, having

    - a flexural modulus, determined according to ISO 178, of at least 1500 MPa, preferably at least 1550 MPa, and more preferably at least 1575 MPa; and
    - a Charpy Notched impact strength at 23 °C, determined according to ISO 179 1eA, of at least 15.0 kJ/m$^2$, preferably at least 16.0 kJ/m$^2$, and more preferably at least 17.0 kJ/m$^2$.

5.  The composite material according to any one of the preceding claims, comprising

    (a) from 28.0 to 52.0 wt.-%, preferably from 30.0 to 50.0 wt.-%, and more preferably from 32.5 to 45.0 wt.-%,

of the first heterophasic propylene-ethylene copolymer (HECO1),
(b) from 15.0 to 28.0 wt.-%, preferably from 18.0 to 27.0 wt.-%, and more preferably from 20.0 to 27.0 wt.-% of the second heterophasic propylene-ethylene copolymer (HECO2),
(c) from 6.0 to 13.0 wt.-%, preferably 6.5 to 12.0 wt.-%, and more preferably 7.0 to 11.0 wt.-%, of the ethylene-based elastomer,
(d) from 8.0 to 28.0 wt.-%, preferably from 10.0 to 26.0 wt.-%, and more preferably from 12.0 to 22.0 wt.-%, of the bamboo-based fibers,
(e) from 1.0 to 5.0 wt.-%, preferably from 1.5 to 4.5 wt.-%, and more preferably from 2.0 to 4.0 wt.-%, of the compatibilizer,
(f) from 0.2 to 5.0 wt.-%, preferably 0.3 to 5.0 wt.-%, and more preferably 0.4 to 5.0 wt.-%, of the additives,
(g) from 1.0 to 15.0 wt.-%, preferably from 2.0 to 12.0 wt.-%, and more preferably from 5.0 to 11.0 wt.-%, of the high density polyethylene,

wherein the weight amounts are relative to the total weight of the composite material, and optionally wherein the weight amounts add up to at least 98.0 wt.-%, preferably at least 99.0 wt.-%, and more preferably to 100.0 wt.-%.

6. The composite material according to any one of the preceding claims, the first heterophasic propylene-ethylene copolymer (HECO1) having one or both, preferably both, of the following characteristics:

- a soluble fraction (SF) content, determined according to CRYSTEX QC analysis, in the range from 6.0 to 22.0 wt.-%, preferably 8.0 to 20.0 wt.-%, and more preferably 10.0 to 19.0 wt.-%, relative to the total weight of the first heterophasic propylene-ethylene copolymer (HECO1); and
- an intrinsic viscosity, determined according to DIN ISO 1628/1, of the soluble fraction content (iV(SF)), according to CRYSTEX QC analysis, in the range from 1.5 to 3.5 dL/g, preferably 1.7 to 3.3 dL/g, and more preferably 1.8 to 3.2 dL/g.

7. The composite material according to any one of the preceding claims, the second heterophasic propylene-ethylene copolymer (HECO2) having one or both, preferably both, of the following characteristics:

- a melt flow rate ($MFR_2$), determined according to ISO 1133 at 230 °C and 2.16 kg, in the range from 4 to 25 g/10 min, preferably from 4 to 20 g/10 min, and more preferably from 5 to 15 g/10 min; and
- an intrinsic viscosity, determined according to DIN ISO 1628/1, of the soluble fraction content (iV(SF)), according to CRYSTEX QC analysis, in the range from 2.0 to 7.0 dL/g, preferably from 2.5 to 6.8 dL/g, and more preferably from 3.5 to 6.5 dL/g.

8. The composite material according to any one of the preceding claims, the second heterophasic propylene-ethylene copolymer (HECO2) having at least one, preferably at least two, and more preferably all, of the following characteristics:

- a soluble fraction (SF), determined according to CRYSTEX QC analysis, in the range from 18.0 to 38.0 wt.-%, preferably 19.0 to 35.0 wt.-%, and more preferably 19.0 to 33.0 wt.-%, relative to the total weight of the second heterophasic propylene-ethylene copolymer (HECO2);
- a soluble fraction (SF) having an ethylene content (C2(SF)) determined by FT-IR spectroscopy calibrated by quantitative $^{13}$C-NMR spectroscopy, in the range from 20.0 to 50.0 wt.-%, preferably in the range from 20.0 to 45.0 wt.-%, and more preferably in the range from 21.0 to 40.0 wt.-%, relative to the total weight of the soluble fraction (SF) of the second heterophasic propylene-ethylene copolymer (HECO2); and
- a ratio of the intrinsic viscosity of the soluble fraction content (iV(SF)), according to CRYSTEX QC analysis, to the intrinsic viscosity of the crystalline fraction (iV(CF)), according to CRYSTEX QC analysis, in the range of from 1.2 to 6.0, preferably from 1.5 to 5.0, and more preferably in the range of 2.0 to 4.0, the intrinsic viscosity being determined according to DIN ISO 1628/1.

9. The composite material according to any one of the preceding claims, the ethylene-based elastomer having a density in the range of 855 to 895 kg/m$^3$, and a melt flow rate ($MFR_2$), determined according to ISO 1133 at 190 °C and 2.16 kg, in the range from 0.5 to 30 g/10 min.

10. The composite material according to any one of the preceding claims, the ethylene-based elastomer being a copolymer of ethylene and an alpha-olefin co-monomer having from 4 to 8 carbon atoms, and preferably being a copolymer of ethylene and 1-octene.

**11.** The composite material according to any one of the preceding claims, the compatibilizer being a polar modified propylene homo- or copolymer, and optionally wherein the polar modified propylene homo- or copolymer is a propylene homo- or copolymer grafted with maleic anhydride and/or acrylic acid.

**12.** The composite material according to any one of the preceding claims, the bamboo-based fibers having a weight-based average fiber length in the range of 0.5 to 10 mm, preferably in the range of 0.5 to 7.5 mm, more preferably in the range of 0.7 to 7.0 mm, and even more preferably in the range of 0.8 to 6.5 mm.

**13.** The composite material according to any one of the preceding claims, the high density polyethylene having a density in the range of 945 to 965 kg/m$^3$, and optionally having a melt flow rate (MFR$_2$), determined according to ISO 1133 at 190 °C and 2.16 kg, in the range from 0.5 to 30 g/10 min.

**14.** An injection molded article comprising, preferably consisting of, the composite material according to any one of the preceding claims.

**15.** Use of bamboo-based fibers for reinforcing a polypropylene-based composition or an injection molded part comprising a polypropylene-based composition, wherein the polypropylene-based composition comprises

(i) a first heterophasic propylene-ethylene copolymer (HECO1) having a melt flow rate (MFR$_2$), determined according to ISO 1133 at 230 °C and 2.16 kg, in the range from 60 to 200 g/10 min,
(ii) a second heterophasic propylene-ethylene copolymer (HECO2) having

- a melt flow rate (MFR$_2$), determined according to ISO 1133 at 230 °C and 2.16 kg, in the range from 4 to 30 g/10 min, and
- a soluble fraction (SF), determined according to CRYSTEX QC analysis, in the range from 17.0 to 40.0 wt.-%, relative to the total weight of the second heterophasic propylene-ethylene copolymer (HECO2),

(iii) an ethylene-based elastomer being a copolymer of ethylene and an alpha-olefin co-monomer having from 4 to 12 carbon atoms, and the ethylene-based elastomer having a density in the range from 850 to 900 kg/m$^3$,
(iv) a compatibilizer being a polar modified polypropylene or a polar modified elastomer,
(v) additives, and
(vi) optionally a high density polyethylene.

Europäisches
Patentamt

European
Patent Office

Office européen
des brevets

# EUROPEAN SEARCH REPORT

**Application Number**

**EP 23 17 2048**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 708 471 B2 (EQUISTAR CHEM LP [US]) 18 July 2017 (2017-07-18) * the whole document * | 1-15 | INV. C08L23/12 |
| Y | US 10 538 655 B2 (TOTAL RES & TECHNOLOGY FELUY [BE]) 21 January 2020 (2020-01-21) * the whole document * | 1-15 | |

**TECHNICAL FIELDS SEARCHED (IPC)**

C08L

The present search report has been drawn up for all claims

| Place of search | Date of completion of the search | Examiner |
|---|---|---|
| Munich | 9 August 2023 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 2048

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| US 9708471 | B2 | 18-07-2017 | CN | 105452366 A | 30-03-2016 |
| | | | EP | 3030613 A1 | 15-06-2016 |
| | | | ES | 2693379 T3 | 11-12-2018 |
| | | | US | 2015045479 A1 | 12-02-2015 |
| | | | US | 2017226328 A1 | 10-08-2017 |
| | | | WO | 2015021174 A1 | 12-02-2015 |
| US 10538655 | B2 | 21-01-2020 | BR | 112015021431 A2 | 18-07-2017 |
| | | | CN | 105143319 A | 09-12-2015 |
| | | | EP | 2976381 A1 | 27-01-2016 |
| | | | ES | 2664343 T3 | 19-04-2018 |
| | | | US | 2016040001 A1 | 11-02-2016 |
| | | | WO | 2014147103 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150252179 A1
- CN 103232641 A
- EP 2976381 A1
- WO 2019093898 A2
- US 4506056 A
- US 4753997 A
- EP 1805238 A
- EP 0591224 A
- EP 1028984 A
- EP 1183307 A

### Non-patent literature cited in the description

- **HANS ZWEIFEL.** Plastic Additives Handbook. 2009, 1141-1190
- *International Journal of Polymer Analysis and Characterization,* vol. 25 (8), 581-596
- *CHEMICAL ABSTRACTS,* 6683-19-8
- *CHEMICAL ABSTRACTS,* 1592-23-0
- *CHEMICAL ABSTRACTS,* 31570-04-4